Europäisches Patentamt

European Patent Office

Office européen des brevets

(11) Numéro de publication: **0 037 767**
**A1**

## (12) DEMANDE DE BREVET EUROPEEN

(21) Numéro de dépôt: 81400472.7

(22) Date de dépôt: 25.03.81

(51) Int. Cl.³: **G 01 G 19/30**
**G 01 G 19/38**

(30) Priorité: 28.03.80 FR 8006975

(43) Date de publication de la demande:
14.10.81 Bulletin 81/41

(84) Etats contractants désignés:
AT BE CH DE GB IT LI LU NL SE

(71) Demandeur: FONDERIE ET ATELIERS DES SABLONS
Société Anonyme dite
7, rue Royale
F-45000 Orleans(FR)

(72) Inventeur: Godat, Jean
35, Allée du Houx
F-45160 Olivet(FR)

(72) Inventeur: Paget, Jean
59, rue des Cosnardières
St. Yon 91650 Breuillet(FR)

(74) Mandataire: Jolly, Jean-Pierre et al,
Cabinet BROT 83, rue d'Amsterdam
F-75008 Paris(FR)

(54) Balance destinée notamment au dosage de mélange de produits liquides.

(57) La balance selon l'invention est notamment destineé au dosage de mélanges de produits liquides à partir de formules cumulatrices exprimées en poids. Cette balance comprend a un plateau 4, 7 porté par un capteur à jauges de contraintes 3, monté sur le bâti fixe 1 de la balance et qui fournit un signal représentatif du poids de la charge, à un organe de mesure effectuant l'affichage du poids sur un premier dispositif d'affichage . Cet organe de mesure comprend en outre un clavier de présélection et un dispositif pour l'affichage de la valeur obtenue en décrémentant la valeur initialement affichée en fonction de la quantité de produit apportée sur la balance.

L'invention s'applique à la réalisation de peintures utilisées en carrosserie automobile.

FIG.1

Balance destinée notamment au dosage de mélanges de produits liquides.

La présente invention concerne une balance destinée notamment, mais non exclusivement, au dosage de mélanges de produits liquides tels que les peintures utilisées en carrosserie automobile, à partir de formules cumulatrices exprimées en poids.

Pour effectuer de tels dosages, on utilise, à l'heure actuelle, des balances de type courant ou légèrement adaptées.

Cette solution présente cependant de nombreux inconvénients principalement dus au fait que les balances usuelles sont des appareils souvent fragiles et qui nécessitent des réglages fréquents pour conserver leur fidélité.

L'usage de ces balances ne convient donc pas à un personnel peu familiarisé avec les techniques de dosage comme c'est souvent le cas en carrosserie automobile.

L'invention a pour but de supprimer tous ces inconvénients.

Elle propose une balance de conception simple, robuste et fidèle, qui ne comprend aucun des réglages précédemment mentionnés, ce résultat étant obtenu grâce au fait que son fonctionnement est sensiblement statique et ne fait intervenir aucun élément mobile de précision.

La balance selon l'invention comprend donc essentiellement un plateau porté par un capteur à jauges de contrainte à fixation centrale, monté sur le bâti fixe de la balance et qui fournit un signal représentatif du poids de la charge, quelle que soit sa position sur le plateau, à un organe de mesure effectuant l'affichage du poids ainsi détecté sur un premier dispositif d'affichage.

Selon une autre caractéristique de l'invention, pour faciliter la réalisation de mélanges à partir de formules cumulatrices, le susdit organe de mesure comprend en outre un circuit de présélection comportant :

- un clavier sur lequel peut être frappé le poids d'une quantité déterminée de produits à apporter sur le plateau de la balance (ce poids se trouve indiqué dans la formule

cumulatrice ; il correspond au cumul des quantités de produits déjà apportées, plus la quantité du nouveau produit que l'on doit apporter) ;

- un second dispositif permettant l'affichage initial du poids qui vient d'être frappé ;

- un dispositif permettant de décrémenter la valeur initialement affichée en fonction de la quantité de produit apportée sur la balance et qui se trouve indiquée sur le susdit premier dispositif d'affichage (le retour à zéro du second dispositif d'affichage signifie ainsi que la quantité déterminée de produit a été apportée) et, éventuellement :

- un dispositif de signalisation permettant, lorsqu'on approche du zéro du second dispositif d'affichage, de matérialiser le niveau (en poids) de la quantité effectivement apportée par rapport à la quantité déterminée que l'on doit apporter sur le plateau de la balance (ce niveau peut par exemple être représenté par un échelon lumineux se déplaçant sur une échelle), et

- un dispositif permettant d'obtenir le poids de chacun des produits successivement apportés, à partir du dernier cumul affiché par le premier dispositif d'affichage et du nouveau cumul frappé sur le clavier.

Un mode de réalisation de l'invention sera décrit ci-après, à titre d'exemple non limitatif, avec référence aux dessins annexés dans lesquels :

La figure 1 représente une balance, vue de face, avec coupe partielle ;

La figure 2 est une vue de dessus avec coupe partielle de la balance représentée figure 1 ;

Les figures 3 et 4 représentent, en coupe verticale longitudinale (figure 3) et en coupe horizonrale (figure 4), la balance représentée figures 1 et 2 ;

La figure 5 est un schéma de principe de l'organe de mesure incorporé à la balance.

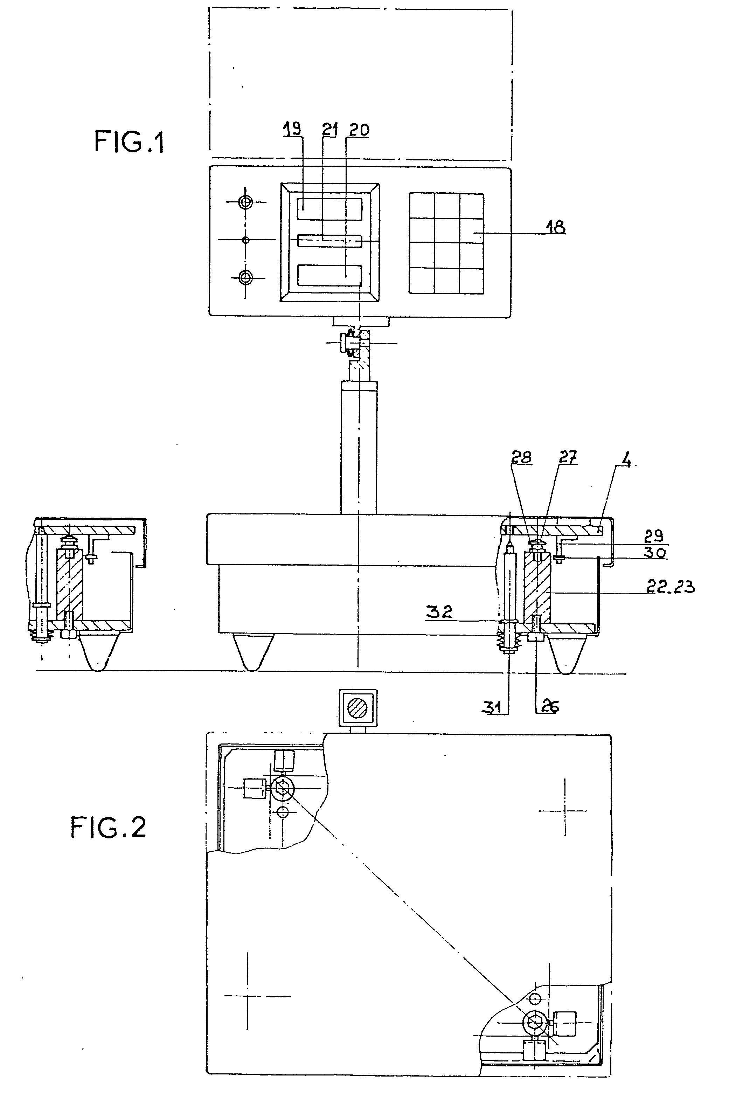

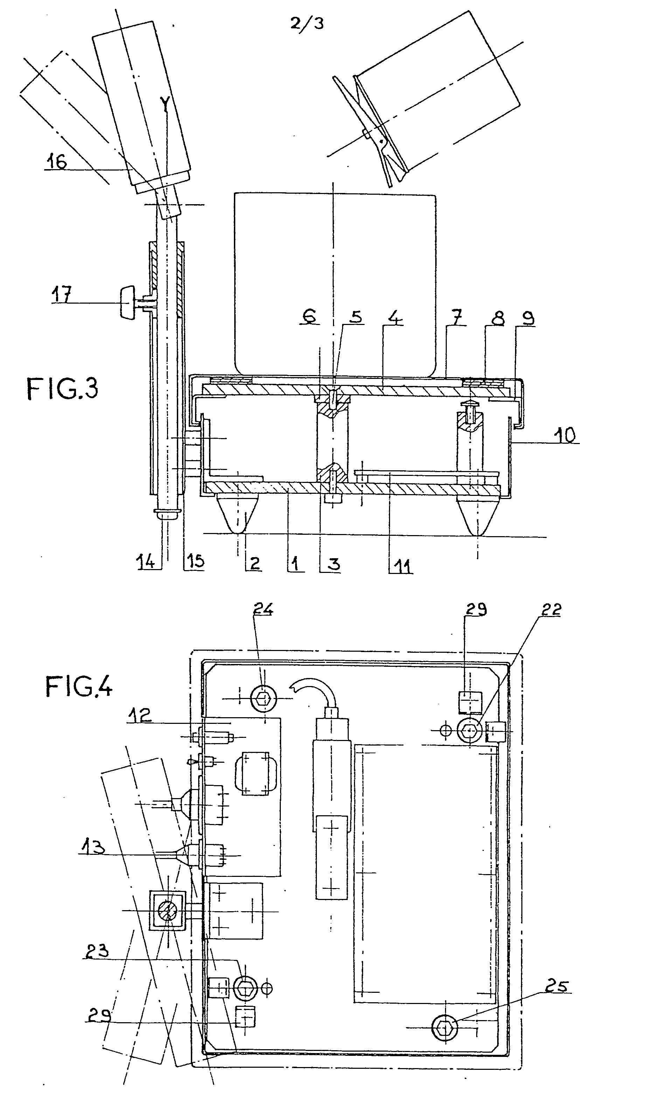

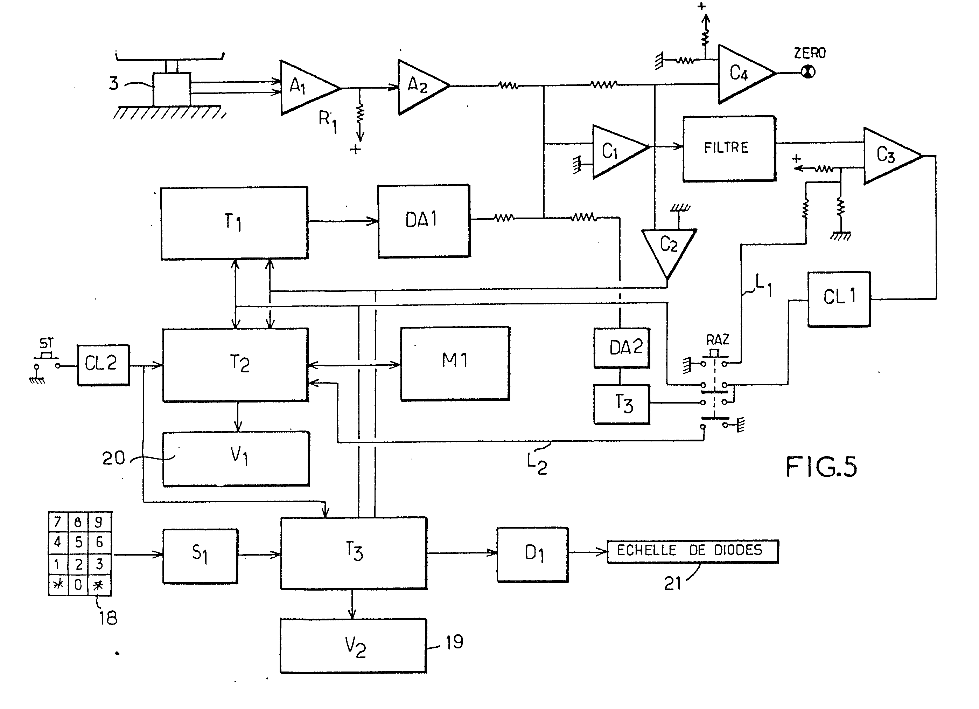

Avec référence aux figures 1 à 4, la balance comprend un socle 1 qui repose sur quatre pieds antivibratoires 2.
Sur ce socle est fixée rigidement une jauge de contrainte
3 qui, elle-même, supporte à sa partie supérieure une
plaque 4 rigidement fixée par deux vis 5 au travers d'une
entretoise 6.

Sur la plaque 4 repose un plateau 7 en acier inoxydable
par l'intermédiaire de quatre pastilles élastiques 8
destinées à répartir l'effort. Deux étriers 9 empêchent
le plateau de se soulever. L'ensemble est protégé de la
poussière par un carter 10 également en acier inoxydable.

Sur le socle 1 on a également fixé le circuit électronique de mesure 11, la platine d'alimentation et de commande
12, cette dernière comportant la prise d'alimentation, un
fusible, un interrupteur et le câble de départ 13 à un
tableau d'affichage 16.

Une colonne 14 coulisse dans un tube 15 solidaire du
socle 1 et porte, à son extrémité supérieure, le tableau
d'affichage 16. Celui-ci est inclinable dans deux directions
autour de l'axe horizontal Y par une friction autour de
l'axe de la colonne 14, cette dernière pouvant être
immobilisée en rotation et dans le sens vertical par la
manette 17.

Cette disposition a l'avantage de permettre à l'opérateur un réglage du tableau d'affichage correspondant à la
hauteur du récipient utilisé d'une part, et correspondant à
la meilleure visibilité et au meilleur éclairage d'autre
part, étant donné que, lorsqu'on verse le produit dans
le récipient, il doit à la fois surveiller le jet qui
s'écoule dans ce dernier et la quantité versée indiquée
sur le boîtier de comptage.

Sur le boîtier de comptage, on distingue dans la
partie droite, un clavier 18, un compteur de quantité
élémentaire 19, un compteur totalisateur 20 et une rampe
de diodes luminescentes 21 dont les utilisations sont
décrites ci-après dans la partie électronique.

Par ailleurs, certaines précautions ont été prises pour éviter les surcharges dangereuses sur la jauge de contrainte, par exemple pendant le transport ou la manutention de l'appareil.

A cet effet, pour limiter le déplacement, on a prévu quatre colonnes verticales 22, 23, 24, 25, disposées en diagonale et rigidement fixées sur la plaque de base par des vis 26.

A la partie supérieure de ces colonnes, des vis 27 et des contre-écrous 28 permettent de limiter la course d'enfoncement du plateau supérieur 4 lorsqu'on place une charge supérieure à la limite admissible sur le plateau ou en cas de choc.

D'autre part, les colonnes 22, 23 sont utilisées pour limiter le déplacement horizontal ; pour ce faire, quatre équerres 29 sont fixées sur le plateau supérieur et munies de vis de réglage 30 qui peuvent être immobilisées par un contre-écrou ou par un produit de collage spécial, ces vis étant réglées à une distance minimum des colonnes de manière à éviter une surcharge sans toutefois risquer de toucher sur les colonnes, ce qui introduirait des erreurs de mesure.

On remarquera que les quatre vis 30 se comportent comme les quatre parois d'un vé, de telle manière que le plateau soit parfaitement positionné dans les deux directions du plan.

Enfin, on a prévu un dispositif 31 constitué par deux tiges dont l'extrémité filetée peut être fixée dans le plateau supérieur après avoir comprimé des rondelles ressorts qui en plaquant fortement le plateau contre les vis de butée 27 évitent tout effort anormal et toutes vibrations pendant le transport, qui pourraient être transmises à la jauge de contrainte et la détériorer.

Il est évident que, à la mise en service, on débloque les deux dispositifs 31 qui retombent par leur propre poids jusqu'à la butée 32 constituée par un jonc d'arrêt et évitant ainsi tout contact avec le plateau.

Comme précédemment mentionné, la balance utilise comme capteur un dispositif à jauges de contrainte 3 à fixation centrale. Ce type de capteur est, par principe, indépendant de la position de la charge sur le plateau et est constitué par un parallélogramme déformable massif muni de quatre jauges de contrainte disposées en pont et compensées en température.

La tension de sortie très faible de ce pont est amplifiée (figure 5) par deux amplificateurs A1 et A2. Entre A1 et A2, un courant ramené par la résistance R1 effectue un tarage approximatif du poids du plateau vide. De la sortie de A2, un courant proportionnel à la charge est envoyé à l'entrée d'un comparateur C1.

Par ailleurs, un compteur T1 suivi d'un convertisseur numérique-analogique DA1 envoie à l'entrée du même comparateur C1 un courant proportionnel à son contenu mais de sens inverse au précédent. Ce dernier a pour rôle de comparer ces deux courants afin d'obtenir, si une différence se produit dans un sens ou dans l'autre, que le compteur T1 se mette à tourner dans un sens tel que l'équilibre soit rétabli. La variation du contenu de T1 sera ainsi toujours égale à la variation de charge à mesurer.

Pour obtenir la rotation du compteur T1, deux commandes sont nécessaires :

a. lui indiquer le sens de rotation,

b. lui envoyer des impulsions d'horloge.

Le sens de rotation est défini par un second comparateur C2 placé à la sortie de C1 et qui détecte le sens du déséquilibre.

Les impulsions d'horloge sont générées par le circuit CL1 qui est déclenché par le comparateur à seuil C3. Ce seuil est rendu nécessaire par le fait que le compteur ne doit avancer (ou reculer) que lorsque le déséquilibre dépasse la valeur d'un demi-échelon de pesage.

Entre C1 et C3, un dispositif de filtrage introduit un certain retard dans le déclenchement de l'horloge afin que le compteur ne suive pas les variations rapides de charge dues à des vibrations, ce qui rendrait la lecture très incommode.

Un second compteur T2 fonctionnant en même temps que T1 et dans le même sens sert à afficher la valeur de la charge par l'intermédiaire de l'afficheur V1. Il est muni d'un circuit de remise à zéro permettant, selon que le plateau est vide ou qu'un récipient s'y trouve, de faire soit le zéro, soit le tarage de la balance.

Ce circuit de remise à zéro comprend un triple commutateur RAZ actionné par poussoir permettant d'abaisser le seuil du comparateur C3 à 1/8 d'échelon (circuit L1) de connecter la sortie du générateur d'horloge à un compteur auxiliaire T3 dont la sortie est reliée au comparateur C1 par l'intermédiaire d'un convertisseur numérique-analogique DA2 et d'effectuer la mise à zéro du compteur T2 (mise à la masse par le circuit L2).

A chaque commande de remise à zéro, un compteur auxiliaire T3 comptant par 1/8 d'échelon et suivi du convertisseur numérique-analogique DA2 intervient pour que l'écart résiduel en sortie du comparateur C1 soit inférieur au 1/4 d'échelon afin de respecter la réglementation en la matière. Ceci est obtenu en commutant les impulsions d'horloge vers ce compteur auxiliaire, en abaissant le seuil du comparateur C3 au 1/8 d'échelon et est confirmé par l'allumage du voyant zéro commandé par un comparateur C4 dont le seuil est de 1/4 d'échelon.

Afin de faciliter l'usage de cette balance, il lui est adjoint un dispositif permettant à l'utilisateur de frapper sur un clavier le poids de la marchandise à apporter. Ce poids apparaît alors sur un second afficheur V2 dont le contenu va décroître lors de l'augmentation de la charge et dont l'arrivée à zéro sera le signe que la quantité voulue est atteinte.

La valeur frappée au clavier 18 est stockée dans le registre à décalage S1 puis est utilisée pour présélectionner le compteur T3 dont le contenu est affiché par l'afficheur V2. Ce dernier compteur reçoit les mêmes signaux d'horloge que T2 mais les ordres de comptage/décomptage sont inversés. Il va donc décompter lorsque la charge augmente d'une valeur égale à celle dont T2 aura compté et, lors de son arrivée à zéro, T2 aura compté d'une valeur égale à celle frappée au clavier.

Par ailleurs, afin de faciliter la lecture de la quantité restant à apporter vers la fin de l'opération, l'afficheur V2 est doublé d'une échelle de diodes électroluminescentes pilotée par le décodeur D1 et sur laquelle un point lumineux entre en déplacement lorsque le contenu de T3 devient inférieur à 200 g. Le déplacement du point lumineux est de 1 cran pour une valeur comprise entre 100 g et 200 g puis de 1 cran par 10 grammes entre 10 et 100 g, puis de 1 cran par gramme entre 0 et 10 grammes.

Enfin, compte tenu de ce que l'utilisateur ne dispose généralement pas de la valeur propre de chaque apport mais des valeurs cumulées avec les précédentes, un dispositif de soustraction a été adjoint. Il permet, connaissant la valeur du dernier cumul qui apparaît sur l'afficheur de pesage V1 et la valeur du nouveau cumul frappé au clavier et affiché sur V2, d'obtenir par soustraction de V1 dans V2 la valeur de l'apport. Cette opération est effectuée en mémorisant temporairement le contenu de T2 dans la mémoire M1 puis en commandant le décomptage de T2 jusqu'à zéro à l'aide d'une horloge auxiliaire CL2 déclenchée par le bouton de soustraction ST. Cette horloge pilote également en décomptage le compteur T3 qui va ainsi régresser d'une valeur égale à celle primitivement contenue dans T2. Ceci étant obtenu, le compteur T2 est rechargé avec le contenu de la mémoire M1 et reprend donc sa valeur initiale.

REVENDICATIONS

1.- Balance destinée notamment au dosage de mélanges de produits liquides à partir de formules cumulatrices en poids, cette balance comprenant un plateau porté par un capteur qui fournit un signal représentatif du poids de la charge à un organe de mesure effectuant l'affichage du poids ainsi détecté sur un premier dispositif d'affichage, caractérisée en ce que ledit organe de mesure comprend en outre un circuit de présélection comportant un clavier sur lequel peut être frappé le poids d'une quantité déterminée de produits à apporter sur le plateau de la balance, un second circuit permettant l'affichage initial du poids qui vient d'être frappé, un troisième dispositif d'affichage permettant d'afficher la valeur obtenue en décrémentant la valeur initialement affichée en fonction de la quantité de produit apportée sur la balance et qui se trouve indiquée sur ledit premier dispositif d'affichage, et un dispositif de signalisation permettant lorsqu'on approche du zéro du troisième dispositif d'affichage, de matéraliser (en poids) par exemple par un échelon lumineux mobile dans une échelle, le niveau de la quantité effectivement apportée par rapport à la quantité déterminée que l'on doit apporter sur le plateau de la balance.

2.- Balance selon la revendication 1, caractérisée en ce qu'elle comprend en outre un dispositif permettant d'obtenir le poids de chacun des produits successivement apportés, à partir du dernier cumul affiché par le premier dispositif d'affichage et du nouveau cumul frappé sur le clavier.

3.- Balance selon l'une des revendications 1 et 2, caractérisée en ce que le signal fourni par le capteur à jauges de contrainte 3 est transmis, après amplification à un comparateur C1 qui effectue la commande d'un générateur d'horloge CL1 dont les impulsions sont comptées ou décomptées par un compteur T1 selon le sens du déséquilibre de la balance, en ce que le comparateur C1 compare le signal

fourni par le capteur 3 avec un signal analogique proportionnel au contenu du compteur T1, après conversion
numérique/analogique, de sorte que la variation du compteur
T1 sera ainsi toujours égale à la variation de la charge
à mesurer et en ce qu'elle comprend un second compteur T2
couplé au compteur T1, servant à afficher la valeur de
la charge par l'intermédiaire d'un afficheur V1.

4.- Balance selon la revendication 3, caractérisée
en ce que le susdit comparateur est relié au générateur
d'horloge CL1 par l'intermédiaire d'un filtre et d'un
dispositif à seuil prévu de manière à ce que le compteur
T1 n'avance ou ne recule que lorsque le déséquilibre
dépasse une valeur telle qu'un demi-échelon de pesage.

5.- Balance selon l'une des revendications 3 et 4,
caractérisée en ce que le susdit dispositif de présélection
comprend :

- un clavier 18 sur lequel on peut frapper le poids
du produit à apporter,

- un registre à décalage S1 pour stocker la valeur
frappée sur le clavier 18, ce registre S1 présélectionnant
un compteur T3 dont le contenu est affiché sur un afficheur
V2,

- une liaison pour transmettre au compteur T3 les
mêmes signaux d'horloge que ceux qui sont transmis au
compteur T2,

- une liaison pour transmettre au compteur T3 des
ordres de comptage de sens inversé par rapport à ceux qui
sont transmis au compteur T2.

6.- Balance selon l'une des revendications 3, 4 et 5,
caractérisée en ce que l'organe de mesure comprend un
circuit permettant, connaissant la valeur du dernier cumul
qui apparaît sur l'afficheur V1 et la valeur du nouveau
cumul frappé au clavier 14 et qui apparaît sur l'afficheur
V2, d'obtenir, par soustraction de V1 et V2, la valeur
de l'apport, ce circuit comprenant :

- une mémoire M1 dans laquelle on mémorise temporairement le contenu du compteur T2,

   - une horloge auxiliaire CL2 déclenchée par un bouton de soustraction ST, qui commande le décomptage des compteurs T2 et T3, de sorte que le compteur T3 regresse d'une valeur égale à celle primitivement contenue dans le compteur T2, le compteur T2 étant rechargé, en fin d'opération, avec le contenu de la mémoire M1.

   7.- Balance selon l'une des revendications précédentes, caractérisée en ce que la résolution du susdit dispositif de signalisation est variable et devient de plus en plus fine avec la diminution de la quantité restant à verser.

   8.- Balance selon la revendication 7, caractérisée en ce que le susdit point entre en déplacement lorsque le contenu du compteur T3 devient inférieur à un premier seuil prédéterminé, à partir duquel il se déplace de un cran par unité de poids égale à une première valeur puis lorsque le contenu du compteur devient inférieur à un second seuil, le susdit point se déplace de un cran par unité de poids égale à une deuxième valeur inférieure à la première puis lorsque le contenu du compteur devient inférieur à un troisième seuil, le susdit point se déplace de un cran par unité de poids égale à une troisième valeur inférieure à la deuxième.

FIG.1

19 21 20

18

28 27 4

29
30

22.23

32

31 26

FIG.2

FIG.3

16

17

6    5    4    7    8    9

10

14   15   2    1    3    11

FIG.4

24        29    22

12

13

23

29

25

FIG.5

0037767

**0037767**

Office européen
des brevets

**RAPPORT DE RECHERCHE EUROPEENNE**

Numéro de la demande

EP 81 40 0472

| Catégorie | Citation du document avec indication, en cas de besoin, des parties pertinentes | Revendica-tion concernée |
|---|---|---|
| | **DE - A - 2 712 576** (METTLER INSTRU-MENTE .AG) <br><br> * Page 4, premier paragraphe; page 5, ligne 17 - page 7, ligne 27; page 9, ligne 13 - page 11, ligne 20; figures 1,4 * <br><br> -- | 1-3,6 |
| | **US - A - 3 959 636** (B.A. JOHNSON et al.) <br><br> * Colonne 1, ligne 35 - colonne 2, ligne 41; colonne 3, ligne 67 - colonne 4, ligne 44; co-lonne 15, ligne 19 - colonne 23 ligne 20; figures 1-4 * <br><br> -- | 1-3,5, 6 |
| | **FR - A - 2 356 913** (COMPAGNIE DES VERNIS VALENTINE) <br><br> * Page 1, lignes 1-4; page 1, ligne 31 - page 2, ligne 2; page 3, ligne 12 - page 10, ligne 25; figures 1-9 * <br><br> -- | 1-3,6 |
| | **GB - A - 1 237 105** (HOWE RICHARD-SON SCALE COMPANY) <br><br> * Page 1, lignes 41-84; page 4, ligne 24 - page 12, ligne 28; figures 2A, 2B * <br><br> & FR - A - 1 576 118 <br><br> ---- | 1,2,4, 6 |

**DOCUMENTS CONSIDERES COMME PERTINENTS**

**CLASSEMENT DE LA DEMANDE (Int. Cl.3)**

G 01 G 19/30
19/38

**DOMAINES TECHNIQUES RECHERCHES (Int. Cl.3)**

G 01 G 1/24
3/12
3/13
3/14
19/30
19/38

**CATEGORIE DES DOCUMENTS CITES**

X: particulièrement pertinent

A: arrière-plan technologique

O: divulgation non-écrite

P: document intercalaire

T: théorie ou principe à la base de l'invention

E: demande faisant interférence

D: document cité dans la demande

L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 02-07-1981 | NENTWICH |

OEB Form 1503.1 06.78